# EUROPÄISCHE PATENTSCHRIFT

(11) **EP 0 465 953 B1**
(45) Veröffentlichungstag und Bekanntmachung des Hinweises auf die Patenterteilung: **05.10.1994**
(21) Anmeldenummer: 91110727.4
(22) Anmeldetag: 28.06.1991
(51) Int. Cl.: G03B 42/04

(54) **Vorratsmagazin für in einer lichtdichten Umhüllung befindlichen Röntgenblattfilmstapel**
Storage magazine for a stack of X-ray sheet films in a light tight envelope
Magasin de stockage pour une pile de pellicules de rayons X en feuilles se trouvant dans une enveloppe étanche à la lumière

(30) Priorität: 03.07.1990 DE 4021111
(43) Veröffentlichungstag der Anmeldung: 15.01.1992
(73) Patentinhaber: Agfa-Gevaert AG, 51373 Leverkusen (DE)
(72) Erfinder: Neudecker, Karl, Dipl.-Ing., W-8000 München 90 (DE); Reuter, Hans-Joachim, Dipl.-Ing., W-8056 Neufahrn (DE); Schmidt, Manfred, Dipl.-Ing., W-8011 Kirchheim (DE); Zanner, Johann, W-8025 Unterhaching (DE)

(56) Entgegenhaltungen:
- DE-A- 2 349 587
- DE-A- 3 605 291
- DE-C- 3 122 582
- DE-C- 3 610 659
- DE-U- 8 534 241
- GB-A- 2 100 881

## Beschreibung

Die Erfindung betrifft ein Vorratsmagazin gemäß Oberbegriff von Anspruch 1.

Durch die DE-PS 31 22 582 ist ein Vorratsmagazin bekannt, das eine oben offene Box in der Form eines flachen Quaders aufweist und an ihrer der Röntgenblattfilmstapel-Oberseite zugewandten Flachseite über ein als Schieber- oder Klappdeckel ausgebildetes Deckelteil mit einem Blattfilmstapel beladbar und mittels des Deckelteils lichtdicht verschließbar ist.

In der DE-PS 36 10 659 ist ein Röntgenblattfilmkassettenent- und -beladegerät beschrieben, in dem Vorratsmagazine gemäß Oberbegriff von Anspruch 1 einsetzbar sind. Das Vorratsmagazin wird hierbei in einen Magazinschacht eines Röntgenblattfilmkassettenent- und -beladegeräts gemäß der DE-PS 36 10 659 eingeschoben. Ein Hebel des Ent- und Beladegeräts löst beim Einschieben des Vorratsmagazins einen Riegel, der Box und Deckelteil miteinander verriegelt, wodurch das schieberohrartige Deckelteil im Ent- und Beladegerät fixiert wird und die Box, vom Deckelteil entriegelt, weiter in das Ent- und Beladegerät einschiebbar ist, bis sie in einem Schlitten zum öffnen und Schließen der Box einrastet. Aus der mittels des Schlittens geöffneten Box kann das Ent- und Beladegerät mit geeigneten Mitteln einen Röntgenblattfilm entnehmen.

Der Hebel, der Box und Deckelteil entriegelt und das Deckelteil im Ent- und Beladegerät fixiert, ist mittels eines Hubmagneten gegen die Kraft eines Federelements in eine Position bewegbar, in der er das Deckelteil freigibt, so daß das Vorratsmagazin aus dem Magazinschacht entnehmbar ist. Bei dem Ent- und Beladegerät gemäß der DE-PS 36 10 659 ist es daher im Fehlerfall möglich, daß der Hubmagnet aktiviert wird und den Schieberdeckel freigibt, obwohl der Schlitten die Box geöffnet hat. In diesem Fall kann eine Bedienperson das Vorratsmagazin trotz geöffneter Box entnehmen und den Schlitten zum öffnen und Schließen der Box, der mit der Box verrastet ist, beschädigen.

Der Erfindung liegt daher die Aufgabe zugrunde, ein Vorratsmagazin der eingangs genannten Art so auszubilden, daß es sicher handhabbar und kostengünstig ist.

Diese Aufgabe wird erfindungsgemäß mittels der Merkmale des ersten Anspruchs gelöst.

Die Erfindung wird anhand von Zeichnungen näher erläutert.

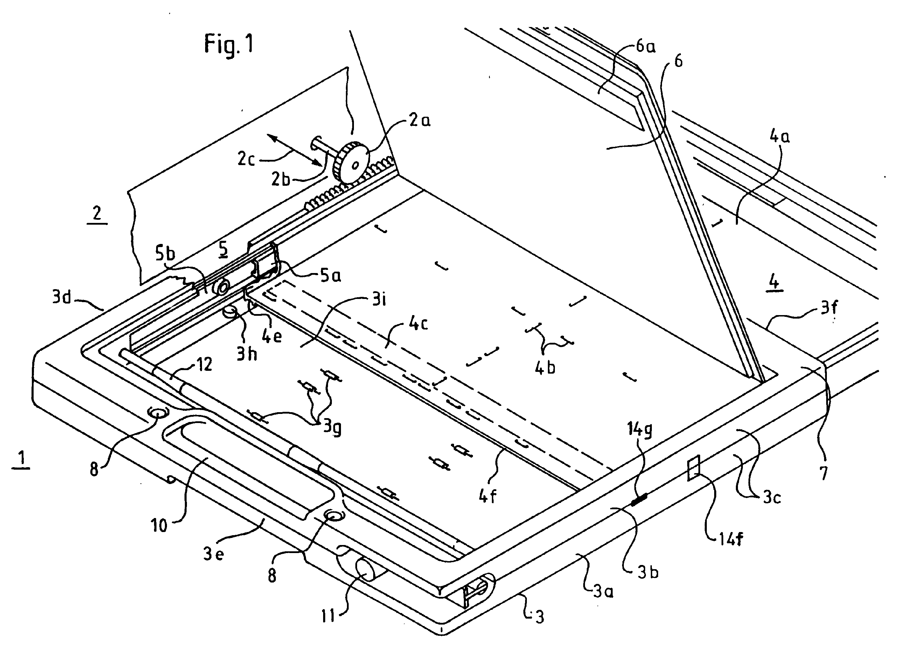

Es zeigen
- Fig. 1: eine perspektivische Darstellung einer Ausführungsform eines erfindungsgemäßen Vorratsmagazins, bei der der Klappdeckel geöffnet ist,

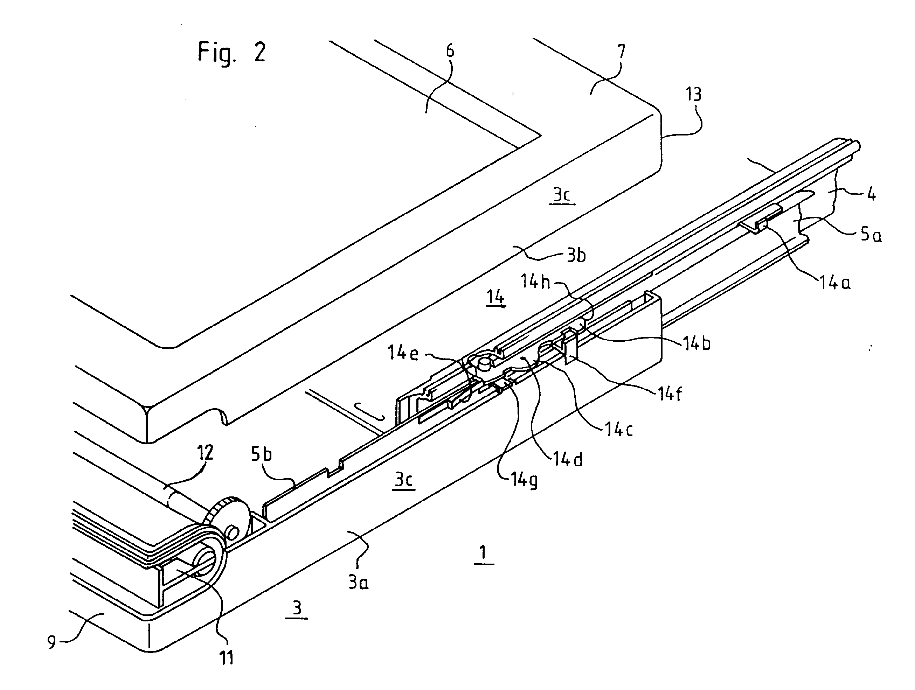

- Fig. 2: eine auseinandergezogene, perspektivische Darstellung des Vorratsmagazins nach Figur 1,

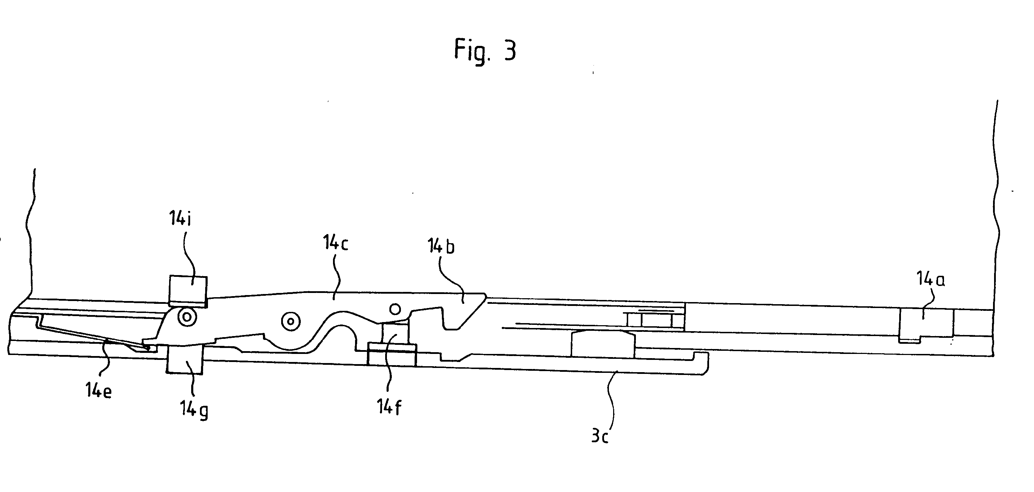

- Fig. 3: eine Ansicht eines Riegelmechanismus eines erfindungsgemäßen Vorratsmagazins.

In den Figuren ist ein Vorratsmagazin mit 1 und eine nur schematisch gezeigte Einrichtung zum Entnehmen einzelner Röntgenblattfilme mit 2 bezeichnet. Das Vorratsmagazin 1 umfaßt einen Deckelteil 3 und eine Box 4, wobei die Box 4 mittels zweier paralleler Teleskopschienen 5 in Schienenlängsrichtung beweglich im Deckelteil 3 gelagert ist. Die Box 4 weist an ihrer Oberseite 4a eine über im wesentlichen ihre ganze Fläche reichende Öffnung auf. Des weiteren umfaßt das Vorratsmagazin 1 einen Klappdeckel 6. Der Klappdeckel ist an einer der Oberseite 4a der Box 4 zugewandten Flachseite 7 des Vorratsmagazins 1 angeordnet und mittels einer Verriegelung 8 lichtdicht mit dem Deckelteil 3 verriegelbar. Das Deckelteil 3 umfaßt eine untere Halbschale 3a und eine obere Halbschale 3b. An der rückwärtigen Schmalseite 3e des Deckelteils 3 ist ein Griff 10 angeformt.

Die Teleskopschienen 5 sind in je einer der beiden senkrecht zur rückwärtigen Schmalseite 3e verlaufenden Schmalseiten 3c, 3d angeordnet. Eine der rückwärtigen Schmalseite 3e gegenüberliegende und dazu parallele vordere Schmalseite 3f des Deckelteils 3 ist offen. Durch diese offene vordere Schmalseite 3f ist die Box 4, geführt von den Teleskopschienen 5, in das und aus dem Deckelteil 3 schiebbar. Ist die Box 4 eingeschoben und der Klappdeckel 6 geschlossen, ist ein im Vorratsmagazin 1 befindlicher Röntgenblattfilmstapel lichtdicht abgeschlossen.

Die Box 4 und das Deckelteil 3 sind im geschlossenen Zustand des Vorratsmagazins 1 mittels eines Riegelmechanismus 14 miteinander verriegelt. Der Riegelmechanismus 14 umfaßt eine mit einem an der Box 4 befestigten Teil 5a der Teleskopschiene 5 fest verbundene Nase 14a. Im geschlossenen Zustand des Vorratsmagazins 1 steht die Nase 14a mit einer Sperrklinke 14b eines Riegels 14c in Eingriff. Der Riegel 14c ist drehbar auf einer Welle 14d gelagert und wird mittels einer Feder 14e in einer Verriegelungsposition gehalten. Die Welle 14d ist mit dem äußeren, am Deckelteil 4 befestigten Teil 5b der Teleskopschiene fest verbunden.

An den Riegel 14c ist ein Entriegelungshebel 14f angelenkt. Das freie Ende des Entriegelungshebels 14f ist flächig ausgeformt und im wesentlichen bündig mit der jeweiligen Schmalseite 3c bzw. 3d im Deckelteil 3 gelagert. Zur Entriegelung der Box 4 des Vorratsmagazins 1 sind in der Einrichtung 2 Mittel vorgesehen, die den Entriegelungshebel 14f gegen die Kraft der Feder 14e in das Innere des Vorratsmagazins 1 drücken.

Wenn die nicht gezeigten Mittel zur Entriegelung der Box 4 den Entriegelungshebel 14f in das Innere des Vorratsmagazins 1 drücken, wobei die Sperrklinke 14b die Nase 14a freigibt, wird eine Verriegelungsklinke 14g, die auch am Riegel 14c angelenkt ist, aus den jeweiligen Schmalseiten 3c bzw. 3d herausgeschoben.

Handhabung und Funktion des erfindungsgemäßen Vorratsmagazins 1 im Zusammenwirken mit der nur angedeuteten Einrichtung 2 zum Entnehmen einzelner Röntgenblattfilme sind, ausgehend von einem leeren, verschlossenen Vorratsmagazin folgende:

Die Bedienperson betätigt die Verriegelung 8 und öffnet den Klappdeckel 6. Sie legt einen Röntgenblattfilmstapel ein. Damit verschiedene Formate von Röntgenblattfilmstapeln in das Vorratsmagazin 1 einlegbar sind, sind in der Box 4 Schlitze 4b vorgesehen, in die nicht gezeigte Abgrenzungsstücke einsteckbar sind, die den Röntgenblattfilmstapel je nach Format in einer bestimmten Position halten.

Nachdem der Röntgenblattfilmstapel eingelegt ist, schließt die Bedienperson den Klappdeckel 6.
Das so vorbereitete Vorratsmagazin 1 kann nun in eine nicht gezeigte Einrichtung 2 zur Entnahme einzelner Röntgenblattfilme eingeschoben werden.

Wenn das Vorratsmagazin 1 in einen Vorratsmagazin-Aufnahmeschacht dieser Einrichtung vollständig eingeschoben ist, werden die Entriegelungshebel 14f durch Mittel zur Entriegelung der Box 4 in das Vorratsmagazin 1 hineingedrückt. Der Riegel 14c ist drehbar um eine Welle 1d angelenkt. Das der Sperrklinke 14b gegenüberliegende Ende des Riegels 14c betätigt dabei die Verriegelungsklinke 14g. Somit ist die Box 4 entriegelt und das Vorratsmagazin 1 gegen Herausziehen aus der Einrichtung 2 gesichert. Soll die Bedienperson das Vorratsmagazin 1 entnehmen, so muß sie an der Einrichtung 2 zur Entnahme von einzelnen Röntgenblattfilmen eine Taste drücken, worauf eine Kontrollvorrichtung je einen Hubmagneten bestromt, der die Mittel zur Entriegelung der Box 4 in eine Position bewegt, in der das Vorratsmagazin 1 bei geschlossener Box 4 entnommen werden kann. Soll nun ein Röntgenblattfilm entnommen werden, steuert die Kontrollvorrichtung, wie sie z.B. in der DE-PS 36 10 660 beschrieben ist, Mittel zum Bewegen eines Kraftübertragungselements 2a an, das auf einer Antriebswelle 2b angeordnet ist. Antriebswelle 2b und Antriebselement 2a können in Richtung 2c hin- und herbewegt werden. Die Antriebswelle 2b und das Antriebselement 2a werden in Richtung 2c auf das Vorratsmagazin 1 zu bewegt, bis das Antriebselement 2a mit einem fest an der Box 4 angeordneten Kraftübertragungselement 4d in Eingriff steht. Das Kraftübertragunselement kann hierbei eine Zahnstange oder eine Reibfläche sein und entsprechend das Antriebselement ein Zahnrad oder ein Reibrad. Es können aber auch andere geeignete Kombinationen von Antriebselement und Kraftübertragungselement eingesetzt werden.

Stehen Kraftübertragungselement 4d und Antriebselement 2a in Eingriff, so kann die Box 4 mittels des sich in eine entsprechende Richtung drehenden Antriebselements 2a aus- und eingeschoben werden. Die Kontrollvorrichtung der Einrichtung 2 zur Entnahme von einzelnen Röntgenblattfilmen steuert die Einrichtung derart, daß bei der Entnahme eines einzelnen Röntgenblattfilms zunächst die Box 4 ausgeschoben wird. In diesem Zustand darf das Vorratsmagazin 1 weder aufgrund einer Fehlbedienung noch aufgrund einer Störung entnehmbar sein. Diese Funktion wird dadurch erreicht, daß bei ausgeschobener Box 4 ein Anschlag 14i auf die Verriegelungsklinke 14g einwirkt. Die Verriegelungsklinke 14g ragt aus der Seite 3c so lange heraus, bis die Box 4 wieder eingeschoben ist. Tritt nun im geöffneten Zustand der Box 4 eine Störung oder ein Bedienfehler auf, der dazu führt, daß die Mittel zur Entriegelung der Box 4 den Entriegelungshebel 14f und damit das Vorratsmagazin 1 zur Entnahme frei geben, bleibt der Riegel 14c aufgrund des Anschlags 14i in seiner ursprünglichen Lage und die Verriegelungsklinke 14g verhindert die Entnahme des Vorratsmagazins 1. Die Entnahme des Vorratsmagazins 1 aus der Einrichtung 2 ist somit erst möglich, wenn der Riegel 14c in seine das Vorratsmagazin 1 verriegelnde Stellung zurück kann. Dies ist wiederum nur bei geschlossener Box 4 möglich, wenn der Anschlag 14i nicht mehr auf die Verriegelungsklinke 14g einwirkt.

Die Box 4 kann aber auch bei Bedarf außerhalb der Einrichtung 2 Von Hand geöffnet werden. Dazu drückt die Bedienperson die Entriegelungshebel 14c und läßt bei geneigten Vorratsmagazinen die Box 4 herausrollen. Um das Vorratsmagazin 1 zu verschließen, schiebt die Bedienperson die Box 4 in den Deckelteil 3 wieder zurück, wobei die Nase 14a mittels einer schräg zu ihrer Bewegungsrichtung verlaufenden Kante 14c den Riegel 14c zurückdrückt und bei geschlossener Box 4 mit der Sperrklinke 14b verrastet.

Bei der Verwendung von Filmmaterial, welches bei Tageslicht in das Vorratsmagazin 1 eingelegt werden kann, ergibt sich folgender Ablauf:

Nach dem Einlegen des Röntgenblattfilmstapels befestigt die Bedienperson die Abzugslasche der Umhüllung an der Welle 12. Das kann auf irgend eine bekannte Art, z.B. mittels Klettbändern erfolgen. Das Einlegen des Röntgenblattfilmstapels und das Befestigen der Abzugslasche ist bei dem erfindungsgemäßen Vorratsmagazin 1 ein einfacher Vorgang, bei dem kein Außengehäuseteil außer dem Klappdeckel 6 bewegt werden muß.

Nachdem der Röntgenblattfilmstapel eingelegt und die Abzugslasche der nicht gezeigten Hülle an der Welle 12 befestigt ist, schließt die Bedienperson den Klappdeckel 6, wobei ein Röntgenblattfilmstapel-Rückhaltestück 4c der Box 4 und ein Rückhaltestück 6a des Klappdeckels 6 derart übereinander zu liegen kommen, daß sie einen Hüllenabzugskanal bilden. Die Umhüllung wird nun durch Abreißen einer Sicherheitslasche bei geschlossenem Vorratsmagazin, auf das Abziehen der Umhüllung vorbereitet. Als nächstes klappt die Bedienperson die Kurbel 11 aus der rückwärtigen Schmalseite 3e aus. Mittels der Kurbel 11 ist die Welle 12 derart antreibbar, daß die Röntgenblattfilmstapelhülle auf ihr aufgewickelt und vom Stapel durch den Hüllenabzugskanal hindurch abziehbar ist. Die Bedienperson kurbelt solange, bis die Hülle vollständig vom Stapel abgezogen ist. Dann wird die Kurbel 11 eingeklappt.

## Patentansprüche

1. Vorratsmagazin (1) in einer Be- und Entladeeinrichtung (2), mit einer schubladenartigen, oben offenen Box (4) und einem die Box lichtdicht umgebenden Deckelteil (3) in der Form eines an der vorderen Schmalseite offenen Quaders, wobei die Box in das Deckelteil einschiebbar und aus dem Deckelteil ausziehbar ist und Box und Deckelteil mittels eines je in einer zur vorderen Schmalseite senkrechten Schmalseite angeordneten Riegelmechanismusses (14) miteinander verriegelbar sind, welcher einen Riegel (14c) umfaßt, der um eine fest mit dem Deckelteil verbundene Welle (14d) gelagert ist und den eine Feder (14e) in einer Stellung hält, in der Box und Deckelteil miteinander verriegelt sind und der von außen betätigbar ist, dadurch gekennzeichnet, daß bei aus dem Deckelteil (3) ausgezogener Box (4) ein fest mit der Box (4) verbundener Anschlag (14i) derart auf eine Verriegelungsklinke (14g) einwirkt, daß diese aus der jeweiligen Schmalseite (3c, 3d) herausragt und damit eine Entnahme des Vorratsmagazins aus der Be- und Entladeeinrichtung verhindert.

2. Vorratsmagazin nach Anspruch 1, dadurch gekennzeichnet, daß zwischen einer Sperrklinke (14b) und der Welle (14d) des Riegels (14c) ein Entriegelungshebel (14f) am Riegel (14c) angelenkt ist, der in den jeweiligen Schmalseiten (3c, 3d) angeordnet ist

3. Vorratsmagazin nach Anspruch 1, dadurch gekennzeichnet, daß zwischen der Welle (14d) und einem mit der Kraft einer Feder (14e) beaufschlagten Ende des Riegels (14c) eine Verriegelungsklinke (14g) angelenkt ist

4. Vorratsmagazin nach einem der vorhergehenden Ansprüche, dadurch gekennzeichnet, daß bei betätigtem Entriegelungshebel (14f) und aus dem Deckelteil (3) ausgezogener Box (4) ein fest mit der Box (4) verbundener Anschlag (14i) derart auf den Riegel (14c) einwirkt, daß der Riegel (14c) in einer Stellung arretiert ist, in der die Verriegelungsklinke (14g) aus der jeweiligen Schmalseite (3c, 3d) herausragt und damit eine Entnahme des Vorratsmagazins aus der Be- und Entladeeinrichtung verhindert.

5. Vorratsmagazin nach einem der vorhergehenden Ansprüche, dadurch gekennzeichnet, daß ein in einer lichtdichten Umhüllung befindlicher Blattfilmstapel in das Vorratsmagazin (1) einlegbar ist und die Umhüllung mit Hilfe von der vorderen Schmalseite (3e) gegenüberliegenden Mitteln zum Aufwickeln der Umhüllung, vorzugsweise einer Aufwickelwalze (12), bei geschlossenem Vorratsmagazin (1) vom Stapel abziehbar ist

## Claims

1. Storage magazine (1) in a loading and unloading device (2) having a drawer-like box (4) which is open at the top and a cover part (3) which surrounds the box in a lighttight manner and is in the form of a square which is open at the front narrow side, wherein the box can be slid into the cover part and withdrawn from the cover part, and the box and cover part can be locked to one another by means of a locking bar mechanism (14) which is disposed in each case in a narrow side perpendicular to the front narrow side and which comprises a locking bar (14c) which is mounted about a shaft (14d), which is rigidly connected to the cover part, and which is held by a spring (14e) in a position in which the box and cover part are locked to one another and which can be actuated from the exterior, characterized in that, when the box (4) is withdrawn from the cover part (3), a stop (14i), rigidly connected to the box (4), acts on a locking catch (14g) in such a way that the latter projects out of the respective narrow side (3c, 3d) and thus prevents the storage magazine being removed from the loading and unloading device.

2. Storage magazine according to Claim 1, characterized in that an unlocking lever (14f) is articulated on the locking bar (14c) between a locking catch (14b) and the shaft (14d) of the locking bar (14c) and is disposed in the respective narrow sides (3c, 3d).

3. Storage magazine according to Claim 1, characterized in that a locking catch (14g) is articulated between the shaft (14d) and an end of the locking bar (14c) which is acted upon by the force of a spring (14e).

4. Storage magazine according to any one of the preceding claims, characterized in that, when the unlocking lever (14f) is actuated and the box (4) is withdrawn from the cover part (3), a stop (14i) which is rigidly connected to the box (4) acts on the locking bar (14c) in such a way that the locking bar (14c) is locked in a position in which the locking catch (14g) projects out of the respective narrow side (3c, 3d) and thus prevents the storage magazine being withdrawn from the loading and unloading device.

5. Storage magazine according to any one of the preceding claims, characterized in that a sheet film stack located in a lighttight covering can be inserted in the storage magazine (1) and when the storage magazine (1) is closed the covering can be withdrawn from the stack with the aid of means lying opposite the front narrow side (3e) for winding up the covering, preferably a winding roller (12).

## Revendications

1. Magasin de stockage (1) dans un dispositif de chargement et de prélèvement (2), comportant une boîte (4) du type analogue à un tiroir, ouverte vers le haut, et un élément de couvercle (3) entourant de façon étanche à la lumière la boîte et ayant la forme d'un parallélépipède qui est ouvert du côté du chant avant, la boîte pouvant être poussée dans l'élément de couvercle et extraite hors de l'élément de couvercle, et la boîte et l'élément de couvercle pouvant être verrouillés l'un avec l'autre via un mécanisme de verrouillage (14) agencé respectivement dans un chant perpendiculaire par rapport au chant avant, ce mécanisme de verrouillage comprenant un verrou (14c) qui est monté autour d'un arbre (14d) fermement relié à l'élément de couvercle et qui est tenu par un ressort (14e) dans une position dans laquelle la boîte et l'élément de couvercle sont verrouillés l'un avec l'autre et qui peut être actionné depuis l'extérieur, caractérisé en ce que lorsque la boîte (4) est extraite hors de l'élément de couvercle (3) une butée (14i) fermement reliée à la boîte (4) agit sur un cliquet de verrouillage (14g) de telle sorte que ce dernier dépasse hors du chant respectif (3c, 3d) et empêche ainsi un prélèvement du magasin de stockage hors du dispositif de chargement et de prélèvement.

2. Magasin de stockage selon la revendication 1, caractérisé en ce qu'entre un cliquet d'arrêt (14b) et l'arbre (14d) du verrou (14c), un levier de déverrouillage (14f) est articulé sur le verrou (14c) qui est agencé sur les chants respectifs (3c, 3d).

3. Magasin de stockage selon la revendication 1, caractérisé en ce qu'entre l'arbre (14d) et une extrémité du verrou (14c) sollicitée par la force d'un ressort (14e), est articulé un cliquet de verrouillage (14g).

4. Magasin de stockage selon l'une quelconque des revendications précédentes, caractérisé en ce que lorsque le levier de déverrouillage (14f) est actionné et que la boîte (4) est extraite hors de l'élément de couvercle (3), une butée (14i) fermement reliée à la boîte (4) agit sur le verrou (14c) de telle sorte que le verrou (14c) est arrêté dans une position dans laquelle le cliquet de verrouillage (14g) dépasse hors du chant respectif (3c, 3d) et empêche ainsi un prélèvement du magasin de stockage hors du dispositif de chargement et de prélèvement.

5. Magasin de stockage selon l'une quelconque des revendications précédentes, caractérisé en ce qu'une pile de pellicules en feuilles se trouvant dans une enveloppe étanche à la lumière peut être introduite dans le magasin de stockage (1), et l'enveloppe peut, lorsque le magasin de stockage (1) est fermé, être extraite de la pile à l'aide de moyens situés en face du chant avant (3e) pour le bobinage de l'enveloppe, de préférence un rouleau de bobinage (12).
